# EUROPEAN PATENT APPLICATION

(11) **EP 4 813 765 A1**
(43) Date of publication of application: **30.09.2026**
(21) Application number: 26166428.8
(22) Date of filing: 20.03.2026
(51) Int. Cl.: B60R 25/25, B60R 25/01, B60R 25/04

(54) **A METHOD, DEVICE AND A SYSTEM FOR OPERATING ONE OR MORE COMPONENTS OF A VEHICLE**

(30) Priority: 24.03.2025 IN 202541027437
(71) Applicant: TVS Motor Company Limited, 600006 Chennai (IN)
(72) Inventor: Naresh, Adepu, 600006 Chennai (IN); Narra, Anitha, 600006 Chennai (IN); Rajan, Sippy, 600006 Chennai (IN); Jinu, P Raj, 600006 Chennai (IN); Gollapalli, Chandra Kiran, 600006 Chennai (IN); Parag, Ashok Inamdar, 600006 Chennai (IN)
(74) Representative: Patentanwaltskanzlei Matschnig & Forsthuber OG

(57) **Abstract**

The claimed subject matter discloses a method 200, a device 102 and a system 100 for operating one or more components of a vehicle 105 using data from at-lest two biometric sensors 114, 116, 118 and 120. The method 200 comprises receiving 208 biometric data of a user from at least two biometric sensors 114, 116, 118, 120, comparing 210 the received biometric data with the pre-stored biometric data, operating 212 one or more components of the vehicle 105, if the received biometric data matches with the pre-stored biometric data.

## Description

### TECHNICAL FIELD

The claimed subject matter in general relates to vehicle access systems. The claimed subject matter in particular relates to operation of one or more components of a vehicle upon successful validation of the authorized users.

### BACKGROUND

Presently, the accessibility to vehicles is through a key. In some vehicles, it may be through a mobile app running on a mobile phone. However, the access using a key has disadvantage that, any person who gets the key, can access the vehicle. Also there are chances that a key may be duplicated and unauthorized person may access the vehicle. Similarly, the access through a mobile phone has a disadvantage that the phone may be used by unauthorized person to gain access to the vehicle.

Some known arts use facial recognition as a biometric data to identify authorized user. However using facial images of the user might not work when the ambient light is low or due to other weather conditions. Moreover, it might be tampered physically by just using facial images of the user to unlock the vehicle. Having a single authentication leaves the gap for loopholes in the access system.

Therefore, there is a clear and pressing need to address the above-mentioned multifaceted challenges associated with security of accessing the vehicles. Existing technologies have made attempts to tackle these issues but often fall short in providing a comprehensive solution that balances security and reliability. The shortcomings of existing anti-theft devices, particularly with respect to false alarms, vulnerabilities to hacking, and the potential for bypassing security mechanisms, must be addressed to ensure that vehicles remain secure in an increasingly complex environment.

The claimed subject matter addresses the above discussed issues.

### SUMMARY

The claimed subject matter is defined in the independent claims. Further details are defined in the dependent claims.

The subject matter discloses a system, device and method for operating one or more components of a vehicle using biometric data from at least two biometric sensors.

The subject matter discloses a method for operating one or more components of a vehicle, using data from at-lest two biometric sensors. The method comprises receiving data regarding ambient light from a light sensor, de-activating a camera if the ambient light is below a threshold based on the received data, activating the camera if the ambient light is equal to or above the threshold based on the received data, receiving biometric data of a user from at least two biometric sensors, comparing the received biometric data with the pre-stored biometric data in the memory and operating one or more components of the vehicle, if the received biometric data matches with the pre-stored biometric data.

Operating one or more components of the vehicle comprises at least one of, unlocking the vehicle, activating an ignition unit, and retrieving a user profile based on the biometric data and configuring the accessories in the vehicle based on the user profile.

Configuring the accessories comprises at least one of, configuring a seat position, configuring a Heating Ventilation and Air Conditioning, HVAC, unit, configuring settings of an infotainment unit and configuring position of rear view mirror.

The method discloses, if the received biometric data fails to match with the pre-stored biometric data, sending a notification to a user device indicating that received biometric data failed to match with the pre-stored biometric data, requesting an additional authorization from the user device, receiving the additional authorization from the user device and operating one or more components of the vehicle, if the received additional authorization matches with a pre-stored additional authorization.

Receiving the additional authorization comprises at least one of, receiving a password from the user device and receiving a response for a push message from the user device.

Receiving biometric data of the user comprises, receiving, if the ambient light is equal to or above the pre-defined threshold, a facial image and at least one additional biometric data from the group of a finger print data, a voice command and image of an iris.

Receiving biometric data of the user comprises, receiving, if the ambient light is below the pre-defined threshold, finger print data and a voice command.

The subject matter discloses an authorization device for operating one or more components of a vehicle, the authorization device comprising a processor and a memory coupled to the processor. The processor is configured to receive data regarding ambient light from a light sensor, de-activate a camera if the ambient light is below a threshold based on the received data, activate the camera if the ambient light is equal or above the threshold based on the received data, receive biometric data of a user from at least two biometric sensors, compare the received biometric data with the pre-stored biometric data and operate one or more components of the vehicle, if the received biometric data matches with the pre-stored biometric data.

### BRIEF DESCRIPTION OF THE DRAWINGS

The detailed description is described with reference to the accompanying figures. In the figures, similar reference numerals are used throughout the drawings to reference like features and components.
Figure 1A illustrates a system for operating one or more components of a vehicle, where vehicle is a car
Figure 1B illustrates a system for operating one or more components of a vehicle, where vehicle is a two wheeled motor vehicle
Figure 2 illustrate a method of operating one or more components of a vehicle

### DETAILED DESCRIPTION OF THE INVENTION

The claimed subject matter now will be described with exemplary embodiments. However, the claimed subject matter may be embodied in many different forms and should not be construed as limited to the embodiments described herein. These embodiments are provided only as examples so that this disclosure is clear and concise.

Some of the terms used in this document may be used with different expressions and also interchangeably. Some examples are given below.

The term 'Vehicle' may refer to a two wheeled motor vehicle, a three wheeled motor vehicle or a car or any passenger motor vehicle or goods carrying motor vehicle. The term 'coupled' is used to indicate coupling between different elements, it may mean directly coupled or indirectly coupled through additional elements. The terms 'module' and 'component' may be used interchangeably. The term 'person' and 'user' may be used interchangeably. The term 'owner' may refer to the actual owner who also may be same as the 'person', 'user' when the owner is trying to access the vehicle. The term 'data' refers to 'biometric data'. The term 'sensors' refers to biometric sensors. The term 'access to vehicle' or 'access' refers to 'opening a door of a vehicle', or 'unlocking a handle lock of a two wheeled motor vehicle'.

Only the details/components required to describe the claimed subject matter in specific, are disclosed in this document. The details/components which are commonly known or understood by people skilled in the art may not be covered in this document.

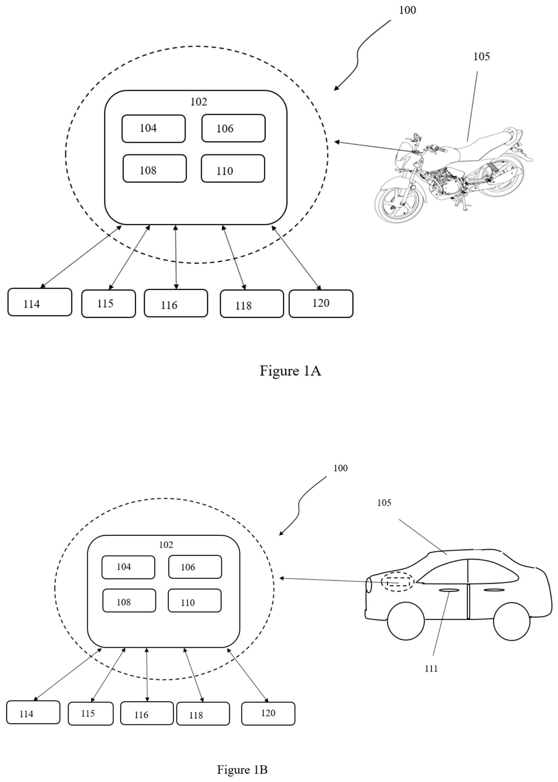

Figure 1A and Figure 1B disclose a system 100 for operating one or more components of a vehicle 105 using data from at-lest two biometric sensor units. The system 100 comprises an authorization device 102, referred as device 102, for operating one or more components of a vehicle 105, a finger print sensor unit 114, a light sensor 115, an image capturing unit 116 for capturing a facial image, a voice authentication unit 118 and an iris detection unit 120. The system 100 can be used in a two wheeled motor vehicle 105 as shown in figure 1A or can be used in a car 105 as shown in figure 1B. These are shown only as examples, however the system, device and the methods may be used in any kind of motor vehicles. The image capturing unit 116 may be a camera. The finger print sensor unit 114 and voice authentication unit 118 are available as off-the shelf biometric sensor units. The image capturing unit 116 is also used as iris detection unit 120.

The device 102 comprises a processor 104 and a memory 106 coupled to the processor 104, input output interfaces 110. In an embodiment the device 102 comprises a communication unit 108. In an embodiment the communication unit 108 may be external to the device 102. In an embodiment the communication unit 108 may comprise a GSM module. The input output interfaces 110 may comprise input ports, output ports, cabling to control mechanical components to open a door of the vehicle 105, to adjust seat position, to adjust the rear view mirror etc.

If the vehicle 105 is a two wheeled motor vehicle, the finger print sensor unit 114, the light sensor 115, the image capturing unit 116, the voice authentication unit 118 and the iris detection unit 120 may be placed near or in the instrumentation cluster display of the two wheeled motor vehicle 105.

If the vehicle 105 is any other vehicle other than a two wheeled motor vehicle, the camera 116 may be fixed to a door or a door frame of the vehicle 105, from where the camera 116 can capture a good facial image of the person trying to open the door of the vehicle 105. The light sensor 115 to capture the ambient light is fixed close to the camera 116. The finger print sensor unit 114 may be fixed to the door handle 111 or to the door frame. The voice authentication unit 118 and the iris detection unit 120 may be placed at suitable locations on the door frame or door.

The light sensor 115 senses the ambient light data and sends the data regarding the ambient light to the device 102. The device 102 receives the data from the light sensor 115. In an embodiment, once the device 102 detects that the ambient light is below a pre-defined threshold, the device 102 de-activates the camera 116, to avoid capturing unclear facial images of the person trying to access the vehicle 105. Accessing the vehicle 105 may refer to trying to open the car door or trying to unlock the handle of the two wheeled motor vehicle 105. In an embodiment the processor 104 may generate a beep or an audio message to the person trying to access the vehicle, indicating that the face is not clear because of the ambient light and to use voice command instead of facial recognition. When the ambient light is good, the camera 116 is activated and captures a facial image of the person. Along with the facial image, the user needs to provide either a finger print scan, a voice command, or scanning of an iris for authorization. In an embodiment the voice authentication unit 118 may be activated only when the ambient light is below a threshold. This is to ensure that only face recognition, finger print recognition, iris recognition are used when good ambient light exists, to make the access robust and secure. The threshold for the light sensor may be adjusted by the user through an adjusting means, for example, a potentiometer in the light sensor 115. The device 102 receives the biometric data from at least two biometric sensors 114, 116, 118 and 120. In an embodiment the iris detection unit 120 may use the same camera 116 and an iris detection module to detect iris in an image and extract the features of the iris for comparison with the pre-stored biometric data. The facial image, the finger print data and the voice command may be analyzed to extract unique features which may be compared with the features of the pre-stored biometric data.

The received/analyzed biometric data is compared with the pre-stored biometric data. When biometric data received from at least two sensors match with the corresponding pre-stored biometric data, the authorization is success and one or more components of the vehicle 105 are operated. Further the user profile is retrieved based on the biometric data and the accessories of the vehicle 105 are configured based on the user profile.

If received biometric data does not match with the corresponding pre-stored biometric data, access to vehicle 105 is denied and it is recorded as a failed access. The ignition unit remains de-activated. The device 102 sends a notification to a user device, indicating that received biometric data failed to match with the pre-stored data. The notification may comprise an SMS to the user device. In addition, the device 102 requests an additional authorization from the user device. The additional authorization may comprise at least one of a password or a response to push message from the user device. Once the additional authorization is received form the user device, the same is compared with the pre-stored additional authorization. If the received additional authorization matches with the pre-stored additional authorization, one or more components of the vehicle 102 are operated.

Operating one or more components of the vehicle 105 comprises, at least one of unlocking the vehicle door if the vehicle 105 is not a two wheeled motor vehicle or unlocking the handle lock of the vehicle 105 if the vehicle 105 is a two wheeled motor vehicle, activating an ignition unit and retrieving a user profile based on the biometric data and configuring the accessories in the vehicle (105) based on the user profile.

Configuring the accessories comprises at least one of configuring a heating ventilation and air-condition HVAC unit, configuring a seat position, configuring settings of infotainment unit and configuring position of rear view mirror.

Unlocking the vehicle door if the vehicle is not a two wheeled motor vehicle or unlocking the handle lock if the vehicle is a two wheeled motor vehicle, may be performed using mechanical components like a solenoid, a lever, a set of cables etc. These mechanical components are controlled by the processor 104 through the input output interfaces 110. Activating the ignition unit may comprise connecting a battery in the vehicle 105 to the fuel injection system in the vehicle 105. Connecting the battery to the fuel injection system in the vehicle 105 may be performed using an electronic switch. The seat position and the position of the rear view mirror may be adjusted using motor drivers, levers, cables and any other electromechanical components. Configurations of HVAC unit and infotainment unit may be performed by sending the user profile to the respective electronic control units in the vehicle 105 and the respective electronic control units may configure the units.

The processors 104 may comprise one or more of central processing units (CPU), digital signal processors (DSP), application specific integrated circuits (ASIC), a controller, field programmable gate arrays (FPGA), or any other hardware device, a firmware device, or any combination of these. The processor 104 is configured using control registers, input output ports, firmware, input output interfaces etc. to perform the operations described herein.

In an embodiment, the memory 106 may comprise one or more volatile and non-volatile memory components which are capable of storing data and instructions to be executed.

The pre-storing of biometric data may be performed through downloading of data from a tester, a mobile application or stored by the devices 102 in a special 'Store' mode using the same biometric sensors 114, 116, 118 and 120. A set of buttons and LEDs may be provided which are controlled by the processor 104 to activate 'Store mode', to receive the data and also to indicate the status of storing. The pre-stored biometric data may belong to different users. The user profiles associated to users through biometric data, are similarly stored in the memory 106. The additional authorization for different user devices is similarly stored in the memory 106.

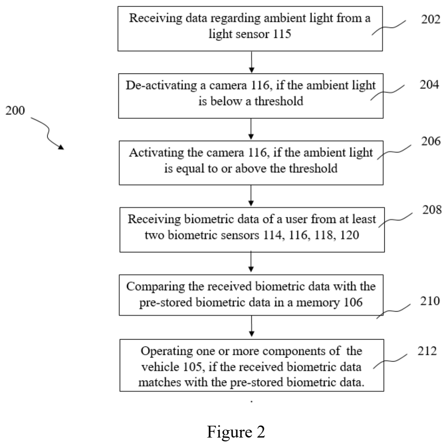

Figure 2 illustrates a method 200 for operating one or more components of a vehicle 105, using data from at-lest two biometric sensors 114, 116, 118 and 120. Step 202 comprises receiving data regarding ambient light from a light sensor 115. Step 204 discloses de-activating a camera, if the ambient light is below a threshold, based on the received data. Step 206 discloses activating the camera, if the ambient light is equal to or above the threshold, based on the received data. Step 208 discloses receiving biometric data of a user from at least two biometric sensors 114, 116, 118, 120. Step 210 discloses comparing the received biometric data with the pre-stored biometric data in the memory 106. Step 212 discloses operating one or more components of the vehicle 105, if the received biometric data matches with the pre-stored biometric data.

The disclosed subject matter has the following technical advantages.

The system 100 combines biometric data capture with a secondary authorization factor via a mobile application reducing the risk of unauthorized access.

The system 100 utilizes algorithms for identifying unique features in the biometric data for rapid and accurate identification, comparing captured biometric data with pre-stored biometric data, in real time, enhancing both security and user convenience. The algorithms may use artificial intelligence or any other concepts.

The biometric sensors are integrated into the vehicle's exterior if the vehicle 105 is not a two wheeled motor vehicle, such as the door handle or rearview mirror, allowing for unobtrusive and convenient user authentication. If the vehicle 105 is a two wheeled motor vehicle, the device 102 and the biometric sensors may be integrated into a instrumentation cluster display of the two wheeled motor vehicle 105

Upon successful authorization of the access to the vehicle, the system 100 automatically configures the settings of the accessories and also the vehicle settings, enhancing user comfort and convenience without compromising security.

The ignition unit remains disabled if authorization fails, and the system notifies the owner or authorities of potential unauthorized access attempts, providing an additional layer of security.

The system's architecture allows for integration with evolving technologies and can be updated to incorporate new authorization methods, avoiding obsolescence as technology advances.

The system 100 solves the problem of generic vehicle settings by initiating user-specific features upon successful authorization, eliminating the inconvenience of manually adjusting settings each time a different authorized user operates the vehicle 105.

The subject matter also provides a robust security solution by combining user identification with ignition activation, addressing the limitations of keyless entry systems that are susceptible to relay attacks and signal interception.

Furthermore, the system's ability to keep the ignition unit de-activated and trigger an alert in case of failed authorization serves as a strong deterrent to potential thieves, addressing the growing concern of vehicle theft.

The system 100 potentially addresses privacy concerns associated with cloud-based personalization systems by storing user profiles locally and using them for comparison. It also streamlines the process of starting the vehicle by automatically identifying users and activating the ignition unit, eliminating the need for traditional keys or fobs while maintaining a high level of security. This seamless user experience contributes to convenience and efficiency, enhancing the overall driving experience. By combining security measures with personalized user experiences.

### LIST OF REFERENCE NUMERALS

- 100: System to access a vehicle
- 102: Device for authorizing access to a vehicle
- 104: Processor
- 105: Vehicle
- 106: Memory
- 108: Communication unit
- 110: Input Output interfaces
- 111: Door handle of the vehicle
- 114: Finger print sensor unit
- 115: Light sensor
- 116: Image capturing unit
- 118: Voice authentication unit
- 120: Iris detection unit

## Claims

1. A method (200) of operating one or more components of a vehicle (105), the method (200) performed by an authorization device (102), the method (200) comprising:
receiving (202) data regarding ambient light from a light sensor (115);
de-activating (204) a camera (116), if the ambient light is below a threshold, based on the received data;
activating (206) the camera (116), if the ambient light is equal to or above the threshold, based on the received data;
receiving (208) biometric data of a user from at least two biometric sensors (114, 116, 118, 120);
comparing (210) the received biometric data with the pre-stored biometric data in a memory (106); and
operating (212) one or more components of the vehicle (105), if the received biometric data matches with the pre-stored biometric data.

2. The method (200) as claimed in claim 1, wherein operating one or more components of the vehicle (105), comprises at least one of:
unlocking the vehicle (105);
activating an ignition unit; and
retrieving a user profile based on the biometric data and configuring the accessories in the vehicle (105) based on the user profile.

3. The method (200) as claimed in claim 2, wherein, configuring the accessories comprises at least one of:
configuring a seat position;
configuring a Heating Ventilation and Air Conditioning, HVAC, unit;
configuring settings of an infotainment unit; and
configuring position of rear view mirror.

4. The method (200) as claimed in claim 1, comprising, if the received biometric data fails to match with the pre-stored biometric data:
sending a notification to a user device indicating that received biometric data failed to match with the pre-stored biometric data;
requesting an additional authorization from the user device;
receiving the additional authorization from the user device; and
operating one or more components of the vehicle (105), if the received additional authorization matches with a pre-stored additional authorization.

5. The method (200) as claimed in claim 4, wherein receiving the additional authorization comprises at least one of:
receiving a password from the user device; and
receiving a response for a push message from the user device.

6. The method (200) as claimed in claim 1, wherein receiving biometric data of the user comprises, receiving, if the ambient light is equal to or above the pre-defined threshold:
a facial image and at least one additional biometric data from the group of:
a finger print data;
a voice command; and
image of an iris.

7. The method (200) as claimed in claim 1, wherein receiving biometric data of the user comprises, receiving, if the ambient light is below the pre-defined threshold:
finger print data; and
a voice command.

8. A authorization device (102) for operating one or more components of a vehicle (105), the authorization device (102) comprising:
a processor (104);
a memory (106) coupled to the processor (104);
the processor (104) configured to:
receive data regarding ambient light from a light sensor (115);
de-activating a camera (116), if the ambient light is below a threshold, based on the received data;
activating the camera (116), if the ambient light is equal to or above the threshold, based on the received data;
receive biometric data of a user from at least two biometric sensors (114, 116, 118, 120);
comparing (210) the received biometric data with the pre-stored biometric data in the memory (106); and
operating (212) one or more components of the vehicle (105), if the received biometric data matches with the pre-stored biometric data.

9. The device (102) as claimed in claim 8, comprising interfaces for:
unlocking the vehicle (105); and
activating an ignition unit.

10. The device (102) as claimed in claim 8, wherein the pre-stored biometric data comprises:
finger print data;
facial image;
voice command; and
image of an iris
of different users.

11. The device (102) as claimed in claim 8, comprising interfaces (110) to connect to:
a finger print sensor unit (114);
a light sensor (115);
an image capturing unit (116);
a voice authentication unit (118); and
an iris detection unit (120).

12. A system (100) for operating one or more components of a vehicle (105), the system (100) comprising
plurality of biometric sensors from the group of:
a finger print sensor unit (114);
an image capturing unit (116)
a voice authentication unit (118); and
an iris detection unit (120).
an authorization device (102) comprising:
a processor (104); and
a memory (106) coupled to the processor (104);
the processor (104) configured to:
receive data regarding ambient light from a light sensor (115);
de-activate a camera (116), if the ambient light is below a threshold, based on the received data;
activate the camera (116), if the ambient light is equal or above the threshold, based on the received data;
receive biometric data of a user from at least two biometric sensors (114, 116, 118, 120);
compare the received biometric data with the pre-stored biometric data in the memory (106); and
operate one or more components of the vehicle (105), if the received biometric data matches with the pre-stored biometric data.
